# EUROPÄISCHE PATENTSCHRIFT

(11) **EP 2 687 281 B1**
(45) Veröffentlichungstag und Bekanntmachung des Hinweises auf die Patenterteilung: **16.09.2015**
(21) Anmeldenummer: 13003033.1
(22) Anmeldetag: 13.06.2013
(51) Int. Cl.: B01D 53/14, B01D 53/18

(54) **Anlage und Verfahren zur Absorption von Einzelkomponenten in Gasen**
System and method for the absorption of individual components in gases
Installation et procédé d'absorption de composants individuels dans des gaz

(30) Priorität: 17.07.2012 AT 7942012
(43) Veröffentlichungstag der Anmeldung: 22.01.2014
(73) Patentinhaber: Andritz AG, 8045 Graz (AT)
(72) Erfinder: Baumann, Christian, A-8111 Judendorf-Strassengel (AT); Köck, Josef, A-8020 Graz (AT); Reissner, Harald, A-8071 Hausmannstätten (AT); Resch, Andreas, A-8042 Graz (AT)
(74) Vertreter: Tschinder, Thomas

(56) Entgegenhaltungen:
- EP-A1- 0 882 487
- EP-A1- 2 361 667
- WO-A1-2008/017817
- GB-A- 2 297 705
- US-A1- 2009 277 334

## Beschreibung

Den Gegenstand dieser Erfindung bildet eine Anlage zur Absorption von Einzelkomponenten (z.B. Schadstoffe oder Wertstoffe) in Gasen, bei der eine Absorptionslösung in einem Absorptionsraum mit dem Gas in Kontakt gebracht wird. Die Absorptionslösung wird dabei über Sprühdüsen in den Absorptionsraum eingebracht, wobei der Absorptionsraum oberhalb einer Zufuhröffnung für das Gas eine Gasverteilungsebene aufweist, durch die Turbulenzen bzw. Verwirbelungen im zugeführten Gasstrom hervorgerufen werden.

Die Erfindung betrifft auch ein Verfahren zur Absorption von Schadstoffen in Gasen.

Bei vielen industriellen Prozessen, insbesondere bei Verbrennungsprozessen, entstehen Abgase bzw. Abluft, welche saure Komponenten wie Schwefeldioxid (SO₂), Salzsäure (HC1), Fluorwasserstoff (HF) und/oder Stickoxide (NO, NO₂) enthalten, die aufgrund ihrer Schädlichkeit für das Ökosystem als Schadstoffe bezeichnet werden oder auch Wertstoffe, wie z.B. Metalloxide, die durch den Behandlungsprozess in einen gasförmigen Zustand versetzt werden.

Zum Schutz der Umwelt wurden daher gesetzliche Bestimmungen für zulässige Grenzwerte von Stoffen in Abgasen erlassen. Damit diese Grenzwerte eingehalten werden können, ist in vielen Fällen eine Reinigung der Abgase erforderlich.

Aus dem Stand der Technik sind verschiedene Technologien zur sogenannten nassen Abgasbehandlung bekannt, die bereits industriell eingesetzt werden. Bei diesen Verfahren im Kraftwerksbereich wird für die Abscheidung von Schadstoffen (SO₂, HC1, HF) eine Absorptionslösung verwendet. Meist handelt es sich dabei um ein Kalziumsorbens (Kalkstein, Branntkalk und Kalkhydrat). Diese Kalziumverbindungen werden mit Wasser angemischt, liegen danach als Suspension vor und werden in einem Absorptionsraum mit den im Rauchgas vorliegenden sauren Gasen in Kontakt gebracht, sodass die Absorption der Schadstoffe von der gasförmigen in die flüssige Phase stattfinden kann. Die in die flüssige Phase absorbierten sauren Schadstoffe liegen danach gelöst in ionischer Form vor und reagieren mit den in der Suspension gelösten Kalzium Ionen des Kalksorbens.

Die sich daraus ergebenden Reaktionsprodukte können in Abhängigkeit der weiteren Prozessführung in der Suspension gelöst bleiben, bei entsprechender Übersättigung Kristalle bilden und schlussendlich sogar in fester Form ausfallen. Der überwiegende Schadstoff in Abgasen aus dem Kraftwerkssektor, insbesondere bei öl- und kohlegefeuerten Verbrennungsprozessen, ist Schwefeldioxid SO₂.

In sogenannten Rauchgasentschwefelungsanlagen wird das SO₂ aus dem Rauchgas mit den zuvor beschriebenen Verfahren abgetrennt, wobei als Absorptionslösung hauptsächlich Kalkstein in Form einer Kalksteinsuspension eingesetzt wird. In diesen Anlagen entsteht aus dem absorbierten Schwefeldioxid SO₂ und dem gelösten Kalkstein in der Suspension nach Oxidations- und Kristallisationsprozessen verwertbarer Gips (CaSO₄ * 2H₂O).

Aus dem Stand der Technik ist es bekannt, den Absorptionsraum für die Rauchgasentschwefelung als Sprühturm in Form einer Tropfensäule auszuführen. In diesem Sprühturm wird die Kalksteinsuspension über mehrere in der Regel horizontal angeordnete Sprühebenen mit Sprühdüsen in einem vertikal rauchgasdurchströmten Apparat versprüht. Die aus den Sprühdüsen austretenden Kalksteinsuspensionstropfen treten mit dem strömenden Rauchgas in Kontakt und es kommt zu Wärme und Stofftransportvorgängen. Diese Anlagen weisen oft auch oberhalb der Gaszufuhr eine Gasverteilungsebene (z.B. REA-Plus-Ebene oder Tray) auf, durch die das zugeführte Gas einerseits vergleichmäßigt wird und durch die andererseits ein hochturbulentes Suspensionsregime (Flüssigkeitsschicht) erzeugt wird. Die Gasverteilungsebene besteht beispielsweise aus einer Vielzahl von miteinander verbundenen Rohen.

Das im Rauchgas enthaltene Schwefeldioxid SO₂ wird durch Absorption in den Suspensionstropfen gelöst und reagiert infolge mit den ebenfalls gelösten Kalziumionen (Ca ++) über Zwischenstufen zu Kalziumsulfit und nach weiterer Oxidation durch den im Tropfen gelöst vorliegenden Sauerstoff zu Kalziumsulfat.

Die Suspensionstropfen fallen nach unten und nehmen entlang ihres Weges kontinuierlich Schwefeldioxid auf. Im unteren Bereich des Kontaktapparates werden sie in einem sog. Sumpf gesammelt und zur Erhöhung der Kontaktzeit durch ein Umwälzsystem erneut über die Sprühebenen mit dem Rauchgas in Kontakt gebracht.

Durch entsprechende Regel- und Steuerkreise wird dem Absorptionsraum kontinuierlich Kalksteinsuspension, Prozesswasser (Verdampfungsverlust der Tropfen) und Oxidationsluft zudosiert sowie auch Suspension aus dem Sumpf abgezogen, sodass sich ein stationärer Zustand einstellt. Die abgezogene Suspension aus dem Sumpf wird in der Regel einer nachgeschalteten Entwässerung zur Gewinnung von Gips zugeführt.

Nachteilig an der beschriebenen Rauchgaswäsche mittels Sprühtürmen sind die erforderlichen Abmessungen der Anlagen mit 20- 40 m hohen Türmen und der vergleichsweise hohe Energieverbrauch.

Bei anderen Ausführungen wie sie in der US 6,051,055 oder der EP 0 882 487 A1 beschrieben werden, wird die Absorptionslösung über nach oben gerichtete Sprühdüsen in den Absorptionsraum versprüht. Die US 2009/0277334 A1 offenbart eine Ausführungsform, bei der die Sprühdüsen nach unten gerichtet sind. In der EP 2 361 667 A1 sind die Sprühdüsen nach oben und nach unten gerichtet.

Im Absorptionsraum gibt es bei diesen Ausführungsformen neben den Sprühdüsen keine weiteren Einbauten, die zu einer Vergleichmäßigung der Gasströmung führen.

Als Alternative dazu ist aus der WO 2010/006848 eine Anlage bekannt, bei welcher das Gas in einer ersten Stufe als disperse Phase durch eine Suspensionsschicht und in einer zweiten Stufe als kontinuierliche Phase geführt wird, in welche die Suspension als disperse Phase eingesprüht wird und wobei die beiden Stufen in einem einzelnen Waschturm baulich vereint sind. Hier werden also die Vorteile von Tropfen- und Blasensäule durch Kombination der beiden Verfahren in einem gemeinsamen Kontaktapparat genutzt.

Nachteilig bei dieser Anlage ist, dass die Suspensionszuführung der ersten Stufe durch eine separate Suspensionsverteilungsebene erfolgt, welche die Gesamtbauhöhe des Kontaktapparats erhöht. Durch die Bauhöhe der Suspensionsverteilungsebene ergibt sich ein Nachteil sowohl im Energiebedarf als auch im Materialbedarf durch die Verwendung einer Unterkonstruktion und einer separaten Sprühebene für die erste Stufe.

Der Erfindung liegt die Aufgabe zugrunde, die beschriebenen Verfahren zu verbessern.

Gelöst wird die Aufgabe mit einer Anlage zur Absorption von Einzelkomponenten wie Schadstoffe oder Wertstoffe in Gasen, bei der die Gasverteilungsebene Sprühdüsen aufweist, über die die Absorptionslösung zugeführt wird.

Die erfindungsgemäße Anlage weist also eine Gasverteilungsebene mit integrierter Suspensionszufuhr auf. Die Gasverteilungsebene hat somit die Funktion, das zugeführte Gas zu verteilen und zu vergleichmäßigen, ein turbulentes Absorptionsregime auszubilden und die Absorptionslösung zuzuführen.

Der Vorteil dieser Erfindung liegt im geringen erforderlichen Pumpendifferenzdruck, der für die Umwälzung der Absorptionsflüssigkeit erforderlich ist. Zum einen reicht für die Einbringung der Absorptionslösung ein geringerer Düsenvordruck (0,2 bis 0,4 bar; vgl. Standarddüsen 0,5 bis 1 bar) aus, der Großteil der Energieeinsparung ergibt sich allerdings durch die geringere geodätische Höhendifferenz, die die Pumpe überwinden muss, da die Zugabe der Absorptionslösung auf der Höhe der Gasverteilungsebene (REA Plus Ebene) erfolgt. Durch dieses Konzept ergibt sich in Summe eine sehr gute Energieausnutzung bei unterschiedlichen Lastfällen.

Die Sprühdüsen sind vorzugsweise als Pralldüsen ausgebildet, dadurch kann die Absorptionslösung in der Gasverteilungsebene fein verteilt werden.

Die Sprühdüsen sind dabei vorzugsweise nach oben gerichtet, also in Strömungsrichtung des Gases.

In einer Ausführungsform der Anlage kann die Absorptionslösung von der Gasverteilungsebene aus auch zusätzlich über weitere nach unten gerichtete Sprühdüsen versprüht werden, dadurch wird ein zusätzlicher Quencheffekt unterhalb der Gasverteilungsebene geschaffen.

Es ist günstig, wenn oberhalb der Gasverteilungsebene eine oder mehrere Sprühebenen angeordnet sind, über die ebenfalls Absorptionslösung in den Absorptionsraum eingebracht wird. Dadurch wird die Reinigungsleistung der Anlage weiter erhöht.

Die Gasverteilungsebene wird erfindungsgemäß durch eine Vielzahl von Rohren gebildet, wobei die Sprühdüsen auf den Rohren angeordnet sind und die Absorptionslösung über die Rohre zuführbar ist.

In den Rohren ist erfindungsgemäß jeweils ein Verdrängungsdorn angeordnet, dessen Querschnitt sich in Strömungsrichtung der Absorptionslösung vergrößert. Dadurch kommt es zu einer gleichmäßigen Suspensionsverteilung über die Sprühdüsen auf die Verteilungsebene.

Über die Verdrängungsdorne kann auch zur Reinigung der Anlage Spülwasser zugeführt werden. Die Erfindung betrifft auch ein Verfahren zur Absorption von Schadstoffen in Gasen, bei dem eine Absorptionslösung in einem Absorptionsraum mit dem Gas in Kontakt gebracht wird, wobei das zugeführte Gas über eine Gasverteilungsebene verteilt und verwirbelt wird. Erfindungsgemäß wird die Absorptionslösung der Gasverteilungsebene zugeführt und über Sprühdüsen in den Absorptionsraum eingebracht. Die Gasverteilungsebene wird dabei aus einer Vielzahl von Rohren gebildet, wobei die Sprühdüsen auf den Rohren angeordnet sind und die Absorptionslösung durch die Rohre dem Absorptionsraum zugeführt wird. Erfindungsgemäß ist in den Rohren jeweils ein Verdrängungsdorn angeordnet, dessen Querschnitt sich in Strömungsrichtung der Absorptionslösung vergrößert, sodass es dadurch zu einer gleichmäßigen Suspensionsverteilung kommt.

Im Folgenden wird die Erfindung anhand von Zeichnungen beschrieben. Es zeigen:
Fig. 1 eine beispielhafte Ausführung der erfindungsgemäßen Anlage;
Fig. 2a eine Draufsicht auf die Gasverteilungsebene;
Fig. 2b einen Ausschnitt aus der Gasverteilungsebene;
Fig. 3 einen Längschnitt durch eine Rohr der Gasverteilungsebene mit Verdrängungsdorn;
Fig. 4 eine Pralldüse für die Zufuhr der Absorptionslösung;
Fig. 5 eine weitere Ausführungsform einer Pralldüse;

Gleiche Bezugszeichen in den einzelnen Figuren bezeichnen jeweils gleiche Merkmale.

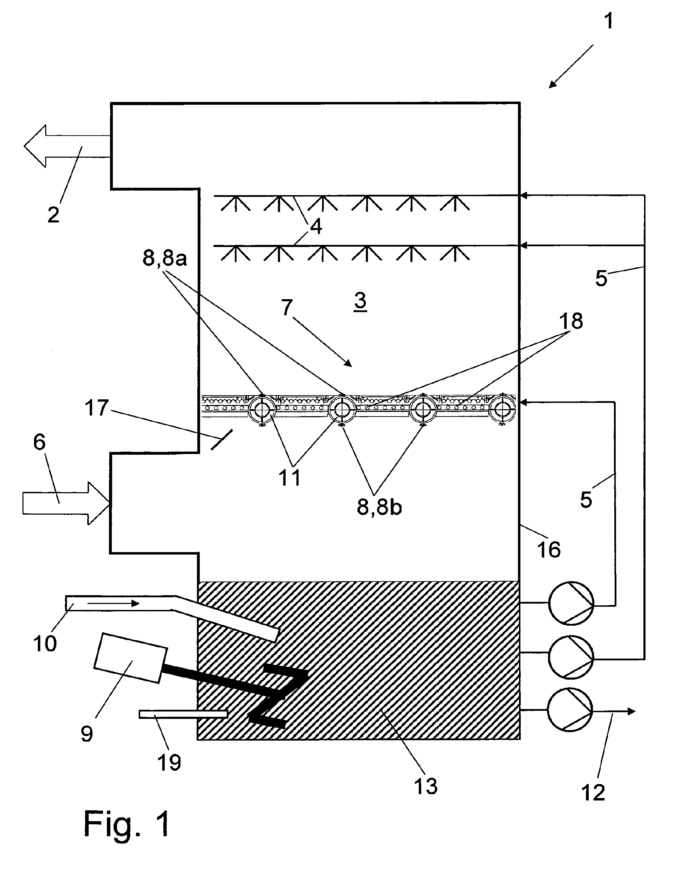

Fig. 1 zeigt einen Querschnitt durch eine erfindungsgemäße Rauchgasreinigungsanlage 1. Dabei strömt das Rauchgas durch die Gaszufuhr 6 in den zylinderförmigen Absorptionsraum 3 ein und wird in eine vertikale Aufwärtsströmung umgelenkt. Das Rauchgas durchströmt den Absorptionsraum 3 von unten nach oben und verlässt diesen durch den Rauchgasaustritt 2. Direkt oberhalb der Gaszufuhr 6 befindet sich die Gasverteilungsebene 7. Die Gasverteilungsebene 7 besteht aus einer Vielzahl von einzelnen Rohren 11, die über Verbindungsrohre 18 oder Verbindungselemente miteinander verbunden sind. Durch die Gasverteilungsebene 7 wird das Rauchgas innerhalb der Absorptionskammer 3 gleichmäßiger verteilt und außerdem werden dadurch im Rauchgas Turbulenzen induziert, die zu einer intensiveren Vermischung des Gases mit der Absorptionslösung 5 führen. Die Gasverteilungseinrichtung 7 wird durch die Behälterwand 16 getragen.

Die Rohre 11 der Gasverteilungsvorrichtung 7 weisen Sprühdüsen 8 auf, über die die Absorptionslösung 5 in den Absorptionsraum 3 eingebracht wird. Die Sprühdüsen 8 sind hier als nach oben gerichtete Pralldüsen 8a ausgeführt. Außerdem sind hier auch weitere nach unten gerichtete Pralldüsen 8b vorgesehen, durch die ebenfalls Absorptionslösung 5 eingesprüht wird.

Im oberen Bereich des Absorptionsraumes 3 wird über die Sprühdüsen der Sprühebene 4 ebenfalls Absorptionslösung 5 eingebracht, die in Tropfenform mit dem Rauchgas in Kontakt tritt.

Unterhalb der Gaszufuhr 6 befindet sich der Wäschersumpf 13. Das Absetzen von Feststoffteilchen im Wäschersumpf 13 wird durch das Rührwerk 9 verhindert, das außerdem eine ausreichende Vermischung sicherstellt. Die Oxidation wird durch eine separate Oxidationsluftzufuhr 19 sichergestellt. Um das gesamte Waschsystem in einem stationären Betrieb zu halten, wird frische Kalksteinsuspension (Absorptionslösung) über die Leitung 10 zugeführt und ein entsprechender Suspensionsstrom 12 zur Gewinnung von Gips aus dem Waschsystem ausgeschleust.

Direkt oberhalb der Gaszufuhr 6 ist ein Re-Dispergierblech 17 angeordnet. Dieses Blech 17 fängt die von oben kommende Absorptionslösung 5 auf und leitet sie als Vorhang in den Wäschersumpf 13. Das zugeführte Gas durchquert beim Eintritt in die Absorptionskammer 3 diesen Vorhang und wird dabei abgekühlt.

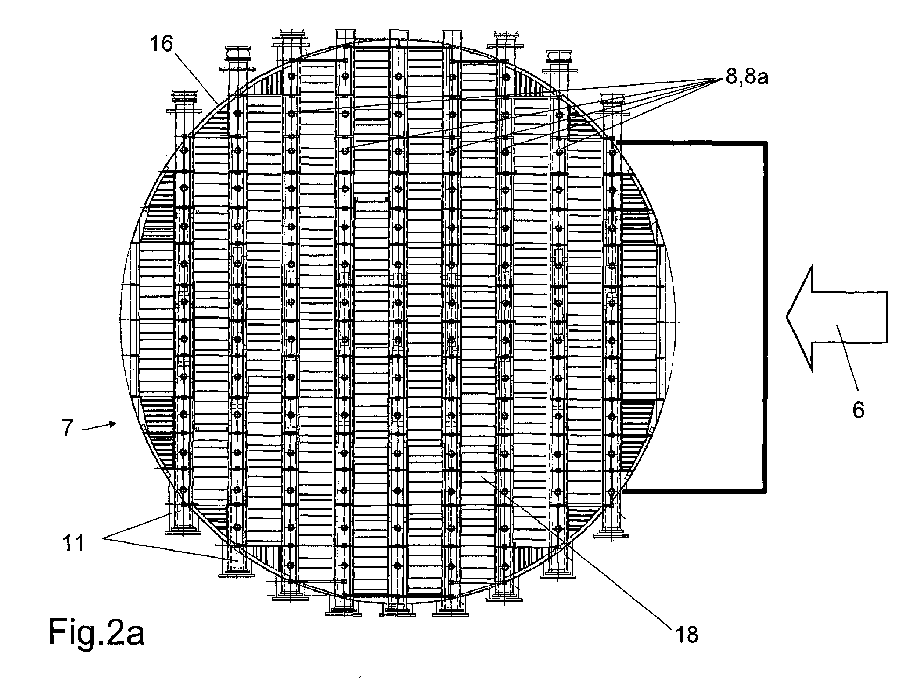

In Fig. 2a ist eine Draufsicht auf die Gasverteilungsebene 7 dargestellt. Die Gasverteilungsebene 7 besteht hier aus einer Vielzahl von Rohren 11, die über Verbindungsrohre 18 oder Verbindungselemente miteinander verbunden sind. Es handelt sich also hier um eine rostartige Konstruktion, durch die das Gas verwirbelt und vergleichmäßigt wird. Die Gasverteilungsebene wird in Fachkreisen auch als REA-Plus Ebene bezeichnet.

Über die Rohre 11 wird auch die Absorptionslösung 5 zugeführt und durch die nach oben gerichteten Pralldüsen 8a verteilt.

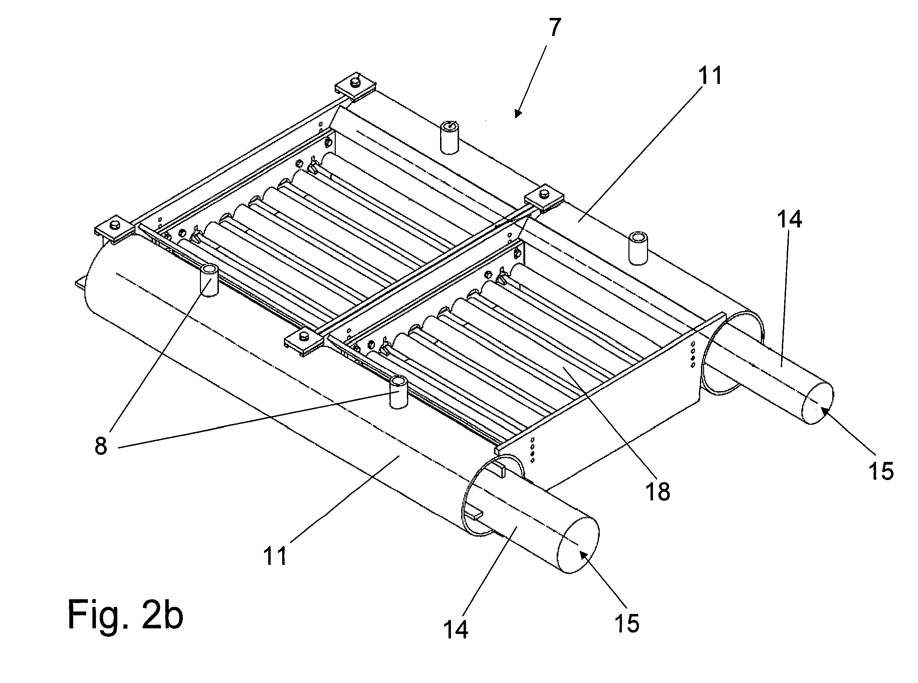

Fig. 2b zeigt einen Ausschnitt aus der Gasverteilungsebene 7 wobei hier im Gegensatz zu Fig. 2a die Verbindungsrohre 18 parallel zu den Rohren 11 angeordnet sind. In den Rohren 11 sind Verdrängungsdorne 14 angeordnet, durch die auch Spülwasser 15 zugeführt werden kann.

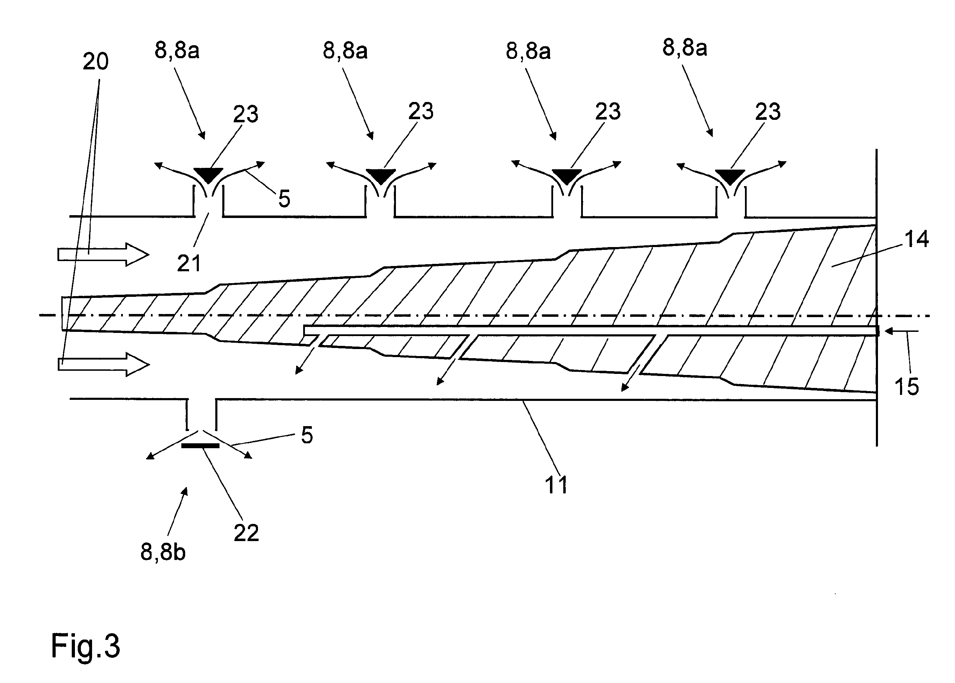

In Fig. 3 ist ein Schnitt durch ein Rohr 11 der Gasverteilungsebene 7 dargestellt. Man erkennt hier deutlich den Verdrängungsdorn 14, dessen Querschnitt sich in Strömungsrichtung 20 der Absorptionslösung 5 erweitert und der somit für eine Vergleichmäßigung der Lösungszufuhr zu den Pralldüsen 8a und 8b sorgt. Die Pralldüsen 8b sind dabei nach unten, entgegen der Strömungsrichtung des Gases, gerichtet. Über die Spülwasserzufuhr 15 kann das Rohr 11 gereinigt werden.

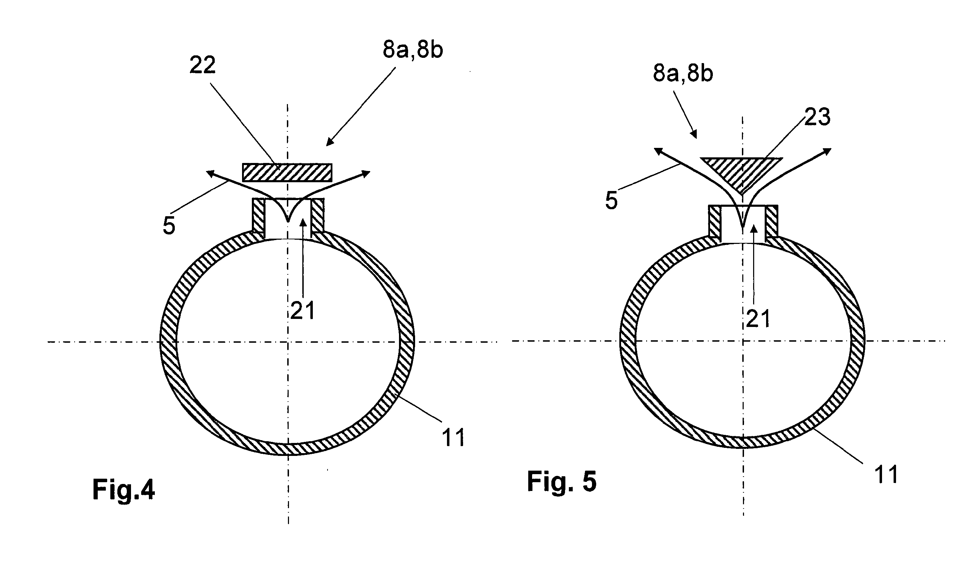

Fig. 4 zeigt ein Ausführungsbeispiel einer möglichen Pralldüse 8a, 8b, hierbei befindet sich oberhalb der Düsenöffnung 21 eine Prallplatte 22, durch die die Absorptionslösung 5 umgelenkt wird. Anstelle der Prallplatte 22 kann auch ein Prallkonus 23 verwendet werden, wie dies in Fig. 5 dargestellt ist.

## Patentansprüche

1. Anlage (1) zur Absorption von Einzelkomponenten wie Schadstoffe oder Wertstoffe in Gasen, bei der eine Absorptionslösung (5) in einem Absorptionsraum (3) mit dem Gas in Kontakt gebracht wird, wobei die Absorptionslösung (5) über Sprühdüsen (8, 8a) in den Absorptionsraum (3) eingebracht wird und wobei der Absorptionsraum (3) oberhalb einer Gaszufuhr (6) für das Gas eine Gasverteilungsebene (7) aufweist, durch die Turbulenzen im zugeführten Gasstrom hervorgerufen werden, wobei die Gasverteilungsebene (7) Sprühdüsen (8, 8a) aufweist, über die die Absorptionslösung (5) zugeführt wird und wobei die Gasverteilungsebene (7) aus einer Vielzahl von Rohren (11) gebildet wird, wobei die Sprühdüsen (8, 8a) auf den Rohren (11) angeordnet sind und die Absorptionslösung (5) durch die Rohre (11) dem Absorptionsraum (3) zuführbar ist, **dadurch gekennzeichnet, dass** in den Rohren (11) jeweils ein Verdrängungsdorn (14) angeordnet ist, dessen Querschnitt sich in Strömungsrichtung (20) der Absorptionslösung (5) vergrößert.

2. Anlage nach Anspruch 1, **dadurch gekennzeichnet, dass** die Sprühdüsen (8, 8a) der Gasverteilungsebene (7) zumindest teilweise als Pralldüsen (8a) ausgebildet sind.

3. Anlage nach Anspruch 1 oder 2, **dadurch gekennzeichnet, dass** die Sprühdüsen (8, 8a) nach oben, also in Strömungsrichtung des Gases, gerichtet sind.

4. Anlage nach Anspruch 3, **dadurch gekennzeichnet, dass** weitere Sprühdüsen (8b) vorgesehen sind, die nach unten, also entgegen der Strömungsrichtung des Gases, gerichtet sind.

5. Anlage nach einem der Ansprüche 1 bis 4, **dadurch gekennzeichnet, dass** oberhalb der Gasverteilungsebene (7) zumindest eine Sprühebene (4) angeordnet ist, über die ebenfalls Absorptionslösung (5) in den Absorptionsraum (3) eingebracht wird.

6. Anlage nach einem der Ansprüche 1 bis 5, **dadurch gekennzeichnet, dass** über die Verdrängungsdorne (14) Spülwasser (15) zuführbar ist.

7. Verfahren zur Absorption von Einzelkomponenten wie Schadstoffe oder Wertstoffe in Gasen, bei dem eine Absorptionslösung (5) in einem Absorptionsraum (3) mit dem Gas in Kontakt gebracht wird, wobei das zugeführte Gas über eine Gasverteilungsebene (7) verteilt und verwirbelt wird, wobei die Absorptionslösung (5) der Gasverteilungsebene (7) zugeführt wird und über Sprühdüsen (8, 8a, 8b) in den Absorptionsraum (3) eingebracht wird und wobei die Gasverteilungsebene (7) aus einer Vielzahl von Rohren (11) gebildet wird, wobei die Sprühdüsen (8, 8a, 8b) auf den Rohren (11) angeordnet sind und die Absorptionslösung (5) durch die Rohre (11) dem Absorptionsraum (3) zugeführt wird, **dadurch gekennzeichnet, dass** in den Rohren (11) jeweils ein Verdrängungsdorn (14) angeordnet ist, dessen Querschnitt sich in Strömungsrichtung (20) der Absorptionslösung (5) vergrößert, sodass es dadurch zu einer gleichmäßigen Suspensionsverteilung kommt.

## Claims

1. Plant (1) for the absorption of individual components, such as pollutants or recyclable materials, in gases, in which an absorption solution (5) is brought into contact with the gas in an absorption chamber (3), where the absorption solution (5) is fed into the absorption chamber (3) through spray nozzles (8, 8a) and where the absorption chamber (3) has a gas distribution level (7), which causes turbulences in the gas flow entering, above a feed opening (6) for the gas, where the gas distribution level (7) has spray nozzles (8, 8a) through which the absorption solution (5) is fed in and where the gas distribution level (7) is formed by a large number of pipes (11), where the spray nozzles (8, 8a) are arranged on the pipes (11) and the absorption solution (5) can be fed through the pipes (11) to the absorption chamber (3), **characterized by** a displacement mandrel (14) with a cross-section that widens in the flow direction (20) of the absorption solution (5) being arranged in each of the pipes (11).

2. Plant according to Claim 1, **characterized by** at least some of the spray nozzles (8, 8a) in the gas distribution level (7) being designed as impingement nozzles (8a).

3. Plant according to Claim 1 or 2, **characterized by** the spray nozzles (8, 8a) being directed upwards, i.e. in the flow direction of the gas.

4. Plant according to Claim 3, **characterized by** other spray nozzles (8b) being provided that are directed downwards, i.e. in the opposite direction to the gas flow.

5. Plant according to one of Claims 1 to 4, **characterized by** at least one spraying level (4), through which absorption solution (5) is also supplied into the absorption chamber (3), being arranged above the gas distribution level (7).

6. Plant according to one of Claims 1 to 5, **characterized by** the displacement mandrels (14) also being suitable for feeding in rinsing water (15).

7. Process for the absorption of individual components, such as pollutants or recyclable materials, in gases, in which an absorption solution (5) is brought into contact with the gas in an absorption chamber (3), where the gas fed in is distributed and swirled by means of a gas distribution level (7), where the absorption solution (5) is supplied to the gas distribution level (7) and fed through spray nozzles (8, 8a, 8b) into the absorption chamber (3) and where the gas distribution level (7) is formed by a large number of pipes (11), where the spray nozzles (8, 8a, 8b) are arranged on the pipes (11) and the absorption solution (5) can be fed through the pipes (11) to the absorption chamber (3), **characterized by** a displacement mandrel (14) with a cross-section that widens in the flow direction (20) of the absorption solution (5) being arranged in each of the pipes (11), causing the suspension to be distributed evenly.

## Revendications

1. Installation (1) pour l'absorption de composants individuels tels que les contaminants ou matières recyclables présents dans des gaz, où une solution d'absorption (5) est mise en contact avec le gaz dans un espace d'absorption (3), la solution d'absorption (5) étant introduite dans l'espace d'absorption (3) moyennant des pulvérisateurs (8, 8a) et l'espace d'absorption (3) comportant un niveau de distribution du gaz (7) au-dessus d'une ouverture d'amenée (6) pour le gaz, qui provoque des turbulences dans le courant de gaz amené, où le niveau de distribution du gaz (7) comporte des pulvérisateurs (8, 8a) par lesquels la solution d'absorption (5) est amenée et où le niveau de distribution du gaz (7) est formé par une multiplicité de tuyaux (11), les pulvérisateurs (8, 8a) étant disposés sur les tuyaux (11) et la solution d'absorption (5) pouvant être amenée à l'espace d'absorption (3) moyennant les tuyaux (11), **caractérisée en ce que** dans chacun des tuyaux (11) un goujon de déplacement (14) est prévu dont la section transversale s'agrandit au sens d'écoulement (20) de la solution d'absorption (5).

2. Installation selon la revendication 1, **caractérisée en ce qu'au** moins quelques-uns des pulvérisateurs (8, 8a) du niveau de distribution du gaz (7) sont étudiés sous forme de buses de rebondissement (8a).

3. Installation selon la revendication 1 ou 2, **caractérisée en ce que** les pulvérisateurs (8, 8a) sont tournés vers le haut, donc au sens d'écoulement du gaz.

4. Installation selon la revendication 3, **caractérisée en ce que** d'autres pulvérisateurs (8b) sont prévus, qui sont tournés vers le bas, donc au sens inverse de l'écoulement du gaz.

5. Installation selon l'une des revendications 1 à 4, **caractérisée en ce qu'au** moins un niveau de pulvérisation (4) est disposé au-dessus du niveau de distribution du gaz (7) permettant également l'amenée de la solution d'absorption (5) dans l'espace d'absorption (3).

6. Installation selon l'une des revendications 1 à 5, **caractérisée en ce que** de l'eau de rinçage (15) peut être amenée par l'intermédiaire des goujons de refoulement (14).

7. Méthode pour l'absorption de composants individuels tels que les contaminants ou matières recyclables présents dans des gaz, où une solution d'absorption (5) est mise en contact avec le gaz dans un espace d'absorption (3), le gaz amené étant distribué et tourbilloné sur un niveau de distribution du gaz (7), où la solution d'absorption (5) est amenée au niveau de distribution du gaz (7) et introduite dans l'espace d'absorption (3) moyennant des pulvérisateurs (8, 8a, 8b), et où le niveau de distribution du gaz (7) est formé par une multiplicité de tuyaux (11), les pulvérisateurs (8, 8a, 8b) étant disposés sur les tuyaux (11) et la solution d'absorption (5) étant amenée à l'espace d'absorption (3) par les tuyaux (11), **caractérisée en ce que** dans chacun des tuyaux (11) un goujon de déplacement (14) est prévu dont la section transversale s'agrandit au sens d'écoulement (20) de la solution d'absorption (5) de manière à assurer une distribution uniforme de la suspension.
